# EUROPEAN PATENT APPLICATION

(11) **EP 4 851 047 A1**
(43) Date of publication of application: **09.12.2026**
(21) Application number: 26181062.6
(22) Date of filing: 26.05.2026
(51) Int. Cl.: B64D 27/33, B64D 31/18, B64D 33/08, F01D 15/10, F02C 7/12

(54) **THERMAL MANAGEMENT ASSEMBLY FOR A HYBRID-ELECTRIC AIRCRAFT PROPULSION SYSTEM**

(30) Priority: 25.05.2025 US 202519218344
(71) Applicant: RTX Corporation, Farmington, CT 06032 (US)
(72) Inventor: CHOE, Jung Muk, Glastonbury, 06033 (US); CLARK, Thomas E., Wells, 04090 (US); AKIN, John, Charlotte, 28205 (US); COOLING, Aaron, Janesville, 53548 (US); HAYES, Tyler W., Rockford, 61107 (US)
(74) Representative: Dehns

(57) **Abstract**

An aircraft propulsion system (20) includes a gas turbine engine (22) and an electrical assembly (26). The gas turbine engine (22) includes a first rotational assembly (40) with a shaft (46) interconnecting a bladed compressor rotor (48) and a bladed turbine rotor (50). The electrical assembly (26) includes a first electric machine (86) coupled to the rotational assembly, a control unit (88) electrically connected to the electric machine (86), and a thermal management assembly (84). The thermal management assembly (84) includes a cooling circuit (94) for the electric machine (86), a separate cooling circuit (98) for the control unit (88), and a pump assembly (102). The pump assembly (102) includes a first pump (104A) within the electric machine cooling circuit (94) and a second pump (104C) within the control unit cooling circuit (98). Each pump (104A, 104C) includes an electric motor (108A, 108C). A pump controller (106) includes a pump motor drive unit (110) configured to receive electrical power from an aircraft electrical distribution system (112) and supply power to the electric motor (108A, 108C) of both the first and second pumps (104A, 104C).

## Description

### Technical Field

This disclosure relates generally to hybrid-electric propulsion systems for aircraft and, more particularly, to thermal management assemblies for electric propulsion system components.

### Background Information

Hybrid-electric propulsion systems for aircraft include electrical equipment, such as electric machines, configured to operate with an engine to provide thrust for an associated aircraft. This electrical equipment may typically require complex thermal management to facilitate reliable operation in view of the varying temperature extremes and operating conditions experienced by aircraft propulsion systems. Various thermal management systems and methods for hybrid-electric aircraft propulsion systems are known in the art. While these known systems and methods may be useful for their intended purposes, there is always room in the art for improvement.

### SUMMARY

According to an aspect of the present invention, a hybrid-electric aircraft propulsion system includes a gas turbine engine and an electrical assembly. The gas turbine engine includes a first rotational assembly. The first rotational assembly includes a first shaft, a bladed first compressor rotor, and a bladed first turbine rotor. The first shaft interconnects the bladed first compressor rotor and the bladed first turbine rotor. The electrical assembly includes a first electric machine, a first control unit, and a thermal management assembly. The first electric machine is coupled with the first rotational assembly. The first control unit is electrically connected to the first electric machine. The thermal management assembly includes a first electric machine cooling circuit, a first control unit (CU) cooling circuit, and a pump assembly. The first electric machine cooling circuit is connected in fluid communication with the first electric machine. The first CU cooling circuit is connected in fluid communication with the first control unit. The pump assembly includes a first pump, a second pump, and a pump controller. The first pump forms a portion of the first electric machine cooling circuit. The first pump includes a first electric motor. The second pump forms a portion of the first CU cooling circuit. The second pump includes a second electric motor. The pump controller includes a first pump motor drive unit operable to receive first electrical power from an aircraft electrical distribution system and supply second electrical power to the first electric motor and the second electric motor.

In an aspect of the above, the gas turbine engine may include a second rotational assembly, the second rotational assembly may include a second shaft, a bladed second compressor rotor, and a bladed second turbine rotor, the second shaft may interconnect the bladed second compressor rotor and the bladed second turbine rotor, the electrical assembly may include a second electric machine and a second control unit, the second electric machine may be coupled with the second rotational assembly, the second control unit may be electrically connected to the second electric machine, the thermal management assembly may include a second electric machine cooling circuit and a second CU cooling circuit, the second electric machine cooling circuit may be connected in fluid communication with the second electric machine, the second CU cooling circuit may be connected in fluid communication with the second control unit, the pump assembly may include a third pump and a fourth pump, the third pump may form a portion of the second electric machine cooling circuit, the third pump may include a third electric motor, the fourth pump may form a portion of the second CU cooling circuit, the fourth pump may include a fourth electric motor, and the first pump motor drive unit may be operable to supply the second electrical power to the third electric motor and the fourth electric motor.

In any of the aspects or embodiments described above and herein, the gas turbine engine may include a second rotational assembly, the second rotational assembly may include a second shaft, a bladed second compressor rotor, and a bladed second turbine rotor, the second shaft may interconnect the bladed second compressor rotor and the bladed second turbine rotor, the electrical assembly may include a second electric machine and a second control unit, the second electric machine may be coupled with the second rotational assembly, the second control unit may be electrically connected to the second electric machine, the first electric machine cooling circuit may be connected in fluid communication with the second electric machine, and the first CU cooling circuit may be connected in fluid communication with the second control unit.

In any of the aspects or embodiments described above and herein, each of the first electric motor and the second electric motor includes a three-phase alternating current (AC) power input, and the three-phase AC power input of the first electric motor and the second electric motor are connected in parallel with a three-phase AC power output of the first pump motor drive unit.

In any of the aspects or embodiments described above and herein, the pump controller may include a plurality of current sensors, a single first current sensor of the plurality current sensors may be disposed at the three-phase AC power input of the first electric motor, a single second current sensor of the plurality of current sensors may be disposed at the three-phase AC power input of the second electric motor.

In any of the aspects or embodiments described above and herein, the single first current sensor may be disposed at a first phase line of the three-phase AC power input of the first electric motor and the single second current sensor may be disposed at a second phase line of the three-phase AC power input of the second electric motor.

In any of the aspects or embodiments described above and herein, the pump controller may include a second pump motor drive unit and a switch assembly, the second pump motor drive unit may be operable to receive the first electrical power from the aircraft electrical distribution system and supply third electrical power to the first electric motor and the second electric motor, and the switch assembly may selectively electrically connect the first pump motor drive unit and the second pump motor drive unit with the first electric motor and the second electric motor.

In any of the aspects or embodiments described above and herein, the switch assembly may be configurable in a first state, a second state, and a third state, the switch assembly in the first state may electrically connect the first electric motor and the second electric motor with the first pump motor drive unit, the switch assembly in the second state may electrically connect the first electric motor and the second electric motor with the second pump motor drive unit, and the switch assembly in the third state may electrically connect the first electric motor with the first pump motor drive unit and the second electric motor with the second pump motor drive unit.

In any of the aspects or embodiments described above and herein, the switch assembly may include a first switching circuit, a second switching circuit, and a third switching circuit, the first switching circuit may be electrically connected between the first pump motor drive unit and the first electric motor along a first three-phase alternating current (AC) line, the second switching circuit may be electrically connected between the second pump motor drive unit and the second electric motor along a second three-phase AC line, and the third switching circuit may be electrically connected between the first three-phase AC line and the second three-phase AC line.

In any of the aspects or embodiments described above and herein, the switch assembly may include a first switching circuit, a second switching circuit, and a filtering circuit, the first switching circuit may be electrically connected between the first pump motor drive unit and the filtering circuit, the second switching circuit may be electrically connected between the second pump motor drive unit and the filtering circuit, and the filtering circuit may be electrically connected with the first electric motor and the second electric motor by a common three-phase alternating current (AC) line.

According to another aspect of the present invention, a hybrid-electric aircraft propulsion system includes a gas turbine engine and an electrical assembly. The gas turbine engine includes a first rotational assembly and a second rotational assembly. The electrical assembly includes a first electric machine, a first control unit, a second electric machine, a second control unit, and a thermal management assembly. The first electric machine is coupled with the first rotational assembly. The first control unit is electrically connected to the first electric machine. The second electric machine is coupled with the second rotational assembly. The second control unit is electrically connected to the second electric machine. The thermal management assembly is connected in fluid communication with each of the first electric machine, the first control unit, the second electric machine, and the second control unit. The thermal management assembly includes a plurality of pumps and a pump controller. Each of the plurality of pumps includes an electric motor. The pump controller includes a first pump motor drive unit operable to receive first electrical power from an aircraft electrical distribution system and supply second electrical power the electric motor of each of the plurality of pumps.

In an aspect of the above, the electric motor of each of the plurality of pumps may include a three-phase alternating current (AC) power input, and the three-phase AC power input of the electric motor of each of the plurality of pumps may be connected in parallel with a three-phase AC power output of the first pump motor drive unit.

In any of the aspects or embodiments described above and herein, the pump controller may include a plurality of current sensors, and a single current sensor of the plurality of current sensors may be disposed at the three-phase AC power input of the electric motor of each of the plurality of pumps.

In any of the aspects or embodiments described above and herein, a first current sensor of the plurality of current sensors may be disposed at a first phase line of the three-phase AC power input of the electric motor of a first pump of the plurality of pumps and a second current sensor of the plurality of current sensors may be disposed at a second phase line of the three-phase AC power input of the electric motor of a second pump of the plurality of pumps.

In any of the aspects or embodiments described above and herein, the pump controller may include a second pump motor drive unit and a switch assembly, the second pump motor drive unit may be operable to receive the first electrical power from the aircraft electrical distribution system and supply third electrical power to the electric motor of each of the plurality of pumps, and the switch assembly may selectively electrically connect the first pump motor drive unit and the second pump motor drive unit with the electric motor of each of the plurality of pumps.

In any of the aspects or embodiments described above and herein, the switch assembly may be configurable in a first state, a second state, and a third state, the switch assembly in the first state may electrically connect the electric motor of each of the plurality of pumps with the first pump motor drive unit, the switch assembly in the second state may electrically connect the electric motor of each of the plurality of pumps with the second pump motor drive unit, and the switch assembly in the third state may electrically connect the electric motor of each of a first subset of the plurality of pumps with the first pump motor drive unit and the electric motor of each of a second subset of the plurality of pumps with the second pump motor drive unit.

In any of the aspects or embodiments described above and herein, the switch assembly may include a first switching circuit, a second switching circuit, and a third switching circuit, the first switching circuit may be electrically connected between the first pump motor drive unit and the electric motor of each of a first subset of the plurality of pumps along a first three-phase alternating current (AC) line, the second switching circuit may be electrically connected between the second pump motor drive unit and the electric motor of each of a first subset of the plurality of pumps along a second three-phase AC line, and the third switching circuit may be electrically connected between the first three-phase AC line and the second three-phase AC line.

In any of the aspects or embodiments described above and herein, the switch assembly may include a first switching circuit, a second switching circuit, and a filtering circuit, the first switching circuit may be electrically connected between the first pump motor drive unit and the filtering circuit, the second switching circuit may be electrically connected between the second pump motor drive unit and the filtering circuit, and the filtering circuit may be electrically connected with the electric motor of each of the plurality of pumps by a common three-phase alternating current (AC) line.

According to another aspect of the present invention, a method for operating a thermal management assembly of a hybrid-electric propulsion system includes rotating a first rotational assembly. The first rotational assembly includes a first shaft, a bladed first compressor rotor, and a bladed first turbine rotor. The first shaft interconnects the bladed first compressor rotor and the bladed first turbine rotor. The method further includes selectively operating a first electric machine coupled with the first rotational assembly using a first control unit electrically connected to the first electric machine and operating a thermal management assembly includes a first electric machine cooling circuit and a first control unit (CU) cooling circuit by pumping a coolant through each of the first electric machine cooling circuit and the first CU cooling circuit with a first pump and a second pump, respectively. Pumping the coolant with the first pump and the second pump includes driving the first pump and the second pump with a pump motor drive unit of a pump controller by receiving first electrical power from an aircraft electrical distribution system at the pump motor drive unit and supplying second electrical power from the pump motor drive unit to a first electric motor of the first pump and a second electric motor of the second pump.

In an aspect of the above, each of the first electric motor and the second electric motor may include a three-phase alternating current (AC) power input, and the three-phase AC power input of the first electric motor and the second electric motor may be connected in parallel with a three-phase AC power output of the pump motor drive unit. The method may further include measuring a single current on the three-phase AC power input of the first electric motor with a first current sensor at a first phase line of the three-phase AC power input of the first electric motor and measuring a single current on the three-phase AC power input of the second electric motor with a second current sensor at a second phase line of the three-phase AC power input of the second electric motor.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood; however, the following description and drawings are intended to be exemplary in nature and non-limiting.

### BRIEF DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of a hybrid-electric propulsion system for an aircraft, in accordance with one or more embodiments of the present disclosure.
FIG. 3 schematically illustrates a thermal management assembly for an electrical assembly of the hybrid-electric propulsion system, in accordance with one or more embodiments of the present disclosure.
FIGS. 4A-B schematically illustrate pump drive motor units for the thermal management assembly, in accordance with one or more embodiments of the present disclosure.
FIG. 5 schematically illustrates a power control circuit of the pump drive motor units, in accordance with one or more embodiments of the present disclosure.
FIG. 6 schematically illustrates a pump controller including the pump drive motor unit and a plurality of current sensors, in accordance with one or more embodiments of the present disclosure.
FIG. 7 schematically illustrates another thermal management assembly for an electrical assembly of the hybrid-electric propulsion system, in accordance with one or more embodiments of the present disclosure.
FIG. 8 schematically illustrates yet another thermal management assembly for an electrical assembly of the hybrid-electric propulsion system, in accordance with one or more embodiments of the present disclosure.
FIG. 9 schematically illustrates another pump controller including the pump drive motor unit and a switch assembly, in accordance with one or more embodiments of the present disclosure.
FIG. 10 schematically illustrates yet another pump controller including the pump drive motor unit and a switch assembly, in accordance with one or more embodiments of the present disclosure.

### DETAILED DESCRIPTION

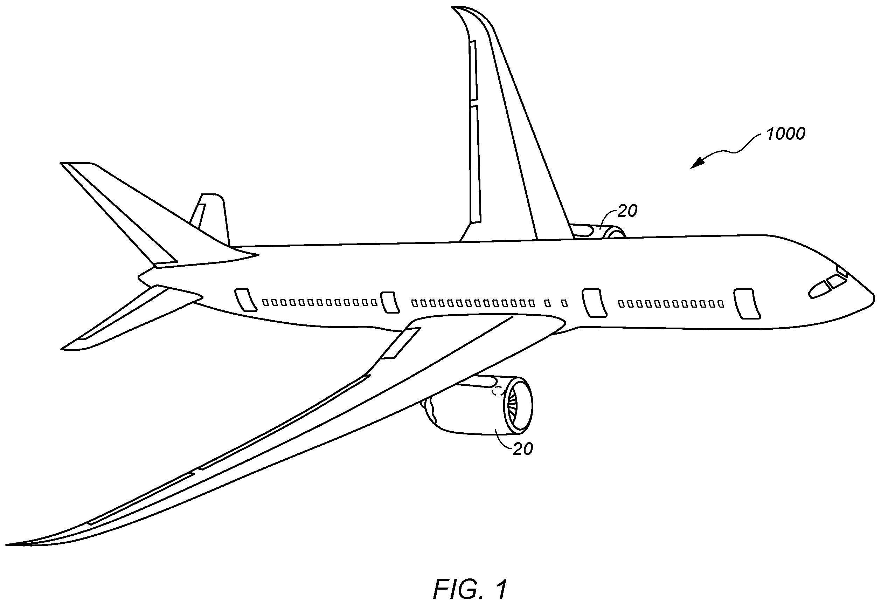

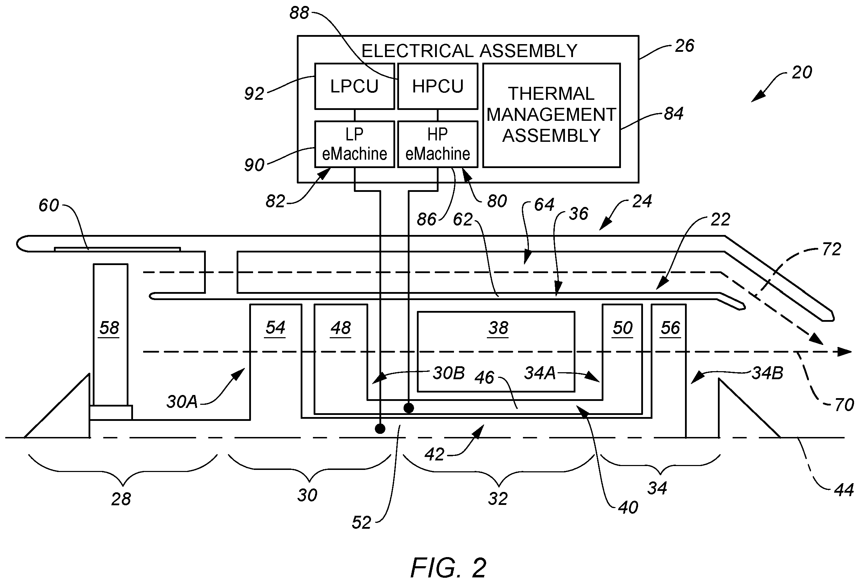

FIG. 1 illustrates a propulsion system 20 for an aircraft 1000. FIG. 2 schematically illustrates a cutaway, side view of the propulsion system 20. The propulsion system 20 of FIG. 2 is configured as a hybrid-electric propulsion system. The propulsion system 20 includes a gas turbine engine 22, a nacelle 24, and an electrical assembly 26.

The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, and/or a propfan (e.g., an open rotor) gas turbine engine.

The gas turbine engine 22 of FIG. 2 includes a fan section 28, a compressor section 30, a combustor section 32, a turbine section 34, and an engine static structure 36. The compressor section 30 includes a low-pressure compressor (LPC) 30A and a high-pressure compressor (HPC) 30B. The combustor section 32 includes a combustor 38 (e.g., an annular combustor). The turbine section 34 includes a high-pressure turbine (HPT) 34A and a low-pressure turbine (LPT) 34B. The compressor section 30, the combustor section 32, and the turbine section 34 may collectively be referred to as an "engine core."

Components of the fan section 28, the compressor section 30, and the turbine section 34 form a first rotational assembly 40 (e.g., a high-pressure (HP) spool) and a second rotational assembly 42 (e.g., a low-pressure (LP) spool) of the gas turbine engine 22. The first rotational assembly 40 and the second rotational assembly 42 are mounted for rotation about a rotational axis 44 (e.g., an axial centerline) of the gas turbine engine 22 relative to the engine static structure 36.

The first rotational assembly 40 includes a first shaft 46, a bladed first compressor rotor 48 for the high-pressure compressor 30B, and a bladed first turbine rotor 50 for the high-pressure turbine 34A. The first shaft 46 interconnects the bladed first compressor rotor 48 and the bladed first turbine rotor 50.

The second rotational assembly 42 includes a second shaft 52, a bladed second compressor rotor 54 for the low-pressure compressor 30A, a bladed second turbine rotor 56 for the low-pressure turbine 34B, and a bladed fan rotor 58 for the fan section 28. The second shaft 52 interconnects the bladed second compressor rotor 54 and the bladed second turbine rotor 56. The second shaft 52 may additionally interconnect the bladed fan rotor 58 with the bladed second compressor rotor 54 and the bladed second turbine rotor 56. Alternatively, the second shaft 52 may be coupled with the bladed fan rotor 58 by a gear train (e.g., a reduction gear assembly, an epicyclic gear assembly, a transmission, etc.), which may enable the bladed fan rotor 58 to operate at a different (e.g., slower) rotational speed than the bladed second compressor rotor 54, the bladed second turbine rotor 56, and the second shaft 52. The first shaft 46 and the second shaft 52 are concentric and configured to rotate about the rotational axis 44. The present disclosure, however, is not limited to concentric configurations of the first shaft 46 and the second shaft 52.

The engine static structure 36 may include one or more engine cases, cowlings, bearing assemblies, and/or other non-rotating structures configured to house and/or support (e.g., rotationally support) components of the gas turbine engine 22 sections 28, 30, 32, 34. The engine static structure 36 of FIG. 2 includes a fan case 60 and an inner fixed structure 62. The fan case 60 extends circumferentially about (e.g., completely around) the rotational axis 44 within the fan section 28. The fan case 60 is disposed radially outward of and circumscribes the bladed fan rotor 58. The inner fixed structure 62 extends circumferentially about (e.g., completely around) the rotational axis 44. The inner fixed structure 62 houses and circumscribes the compressor section 30, the combustor section 32, and the turbine section 34 (e.g., the engine core). The inner fixed structure 62 may form an exterior (e.g., an outer radial portion) of the gas turbine engine 22. The fan case 60 and the inner fixed structure 62 form portions of an annular bypass duct 64 of the propulsion system 20. The bypass duct 64 extends axially through the propulsion system 20.

The nacelle 24 forms an aerodynamic exterior of the propulsion system 20 and a housing for the gas turbine engine 22. The nacelle 24 extends circumferentially about (e.g., completely around) the rotational axis 44. The nacelle 24 extends axially along the rotational axis 44 circumscribing the gas turbine engine 22. The nacelle 24 is disposed at (e.g., on, adjacent, or proximate) and encloses the fan case 60. The nacelle 24 further forms the bypass duct 64 (e.g., an outer radial boundary of the bypass duct 64) through the propulsion system 20.

The electrical assembly 26 of FIG. 2 includes a first electric machine assembly 80 (e.g., an "HP" electric machine assembly) and a second electric machine assembly 82 (e.g., an "LP" electric machine assembly). The first electric machine assembly 80 includes a first electric machine 86 (e.g., an "HP eMachine") and a first control unit 88 ("HPCU"; e.g., a motor control unit, a generator control unit, etc.). The first electric machine 86 is coupled with the first rotational assembly 40 (e.g., the first shaft 46), for example, directly or indirectly through a gear train (e.g., a gear box, a bevel gear assembly, etc.). The first control unit 88 is electrically connected to the first electric machine 86. The second electric machine assembly 82 includes a second electric machine 90 (e.g., an "LP eMachine") and a second control unit 92 ("LPCU"; e.g., a motor control unit, a generator control unit, etc.). The second electric machine 90 is coupled with the second rotational assembly 42 (e.g., the second shaft 52), for example, directly or indirectly through a gear train (e.g., a gear box, a bevel gear assembly, etc.). The second control unit 92 is electrically connected to the second electric machine 90.

Each of the electric machines 86, 90 may be configurable as an electric motor and/or an electric generator (e.g., an electric motor-generator). For example, during a motor mode of operation, the electric machines 86, 90 may operate as the electric motor to convert electricity received from the respective one of the control units 88, 92. By contrast, during a generator mode of operation, the electric machines 86, 90 may operate as the electric generator to convert mechanical power received from the respective one of the rotational assemblies 40, 42 into electricity. The electric machines 86, 90 of the present disclosure, however, are not limited to such exemplary operation. For example, one or both of the electric machines 86, 90 may alternatively each be configured as a dedicated electric generator (e.g., without the electric motor functionality) or as a dedicated electric motor (e.g., without the electric generator functionality).

Each of the control units 88, 92 is configured to control operation of the respective one of the electric machines 86, 90. For example, when operating as the electric motor, the respective control unit 88, 92 is configured to regulate a flow of electricity from an aircraft electrical system to the respective electric machine 86, 90. This electricity flow regulation may include: (a) turning-on the flow of electricity from the aircraft electrical system to the respective electric machine 86, 90 (e.g., electrically coupling the respective electric machine 86, 90 to the aircraft electrical system); (b) turning-off the flow of electricity from the aircraft electrical system to the respective electric machine 86, 90 (e.g., electrically decoupling the respective electric machine 86, 90 from the aircraft electrical system); (c) moderating the flow of electricity from the aircraft electrical system to the respective electric machine 86, 90 (e.g., to control a rotation speed and/or torque of the respective electric machine 86, 90). Here, the respective control unit 88, 92 operates as a motor controller. In another example, when operating as the electric generator, the respective control unit 88, 92 is configured to regulate a flow of electricity from the respective electric machine 86, 90 to the aircraft electrical system. This electricity flow regulation may include: (a) turning-on the flow of electricity from the respective electric machine 86, 90 to the aircraft electrical system (e.g., electrically coupling the respective electric machine 86, 90 to the aircraft electrical system); (b) turning-off the flow of electricity from the respective electric machine 86, 90 to the aircraft electrical system (e.g., electrically decoupling the respective electric machine 86, 90 from the aircraft electrical system); (c) moderating the flow of electricity from the respective electric machine 86, 90 to the aircraft electrical system. Here, the respective control unit 88, 92 operates as a generator controller.

In some embodiments, the first electric machine 86 and the second electric machine 90 may be electrically connected with a single control unit configured to control operation of each of the first electric machine 86 and the second electric machine 90, similar to the operation of the first control unit 88 and the second control unit 92.

The control units 88, 92 may be connected in signal communication with and controlled by an electronic engine control (EEC) unit, a full authority digital engine control (FADEC) unit, or another control unit of the propulsion system 20 or its gas turbine engine 22. The electric machines 86, 90 and the control units 88, 92 may typically be located in different portions of the propulsion system 20. For example, the electric machines 86, 90 may be disposed within the engine static structure 36 at (e.g., on, adjacent, or proximate) the rotational assemblies 40, 42 and/or a gear train (e.g., an accessory gearbox) coupled with the rotational assemblies 40, 42. In contrast, the control units 88, 92 may be disposed outside of the engine static structure 36, for example, on the fan case 60 and/or within the nacelle 24.

In operation of the gas turbine engine 22 of FIG. 2, ambient air is directed through the fan section 28 and into a core flow path 70 (e.g., an annular flow path) and a bypass flow path 72 (e.g., an annular flow path) by rotation of the bladed fan rotor 58. Air flow along the core flow path 70 is compressed by the low-pressure compressor 30A and the high-pressure compressor 30B, mixed and burned with fuel in the combustor 38, and then directed through the high-pressure turbine 34A and the low-pressure turbine 34B. The bladed first turbine rotor 50 and the bladed second turbine rotor 56 rotationally drive the first rotational assembly 40 and the second rotational assembly 42, respectively, in response to the combustion gas flow through the high-pressure turbine 34A and the low-pressure turbine 34B. Air flow along the bypass flow path 72 is directed through the bypass duct 64. The first electric machine 86 and the second electric machine 90 may be selectively operated to apply rotational force to the first rotational assembly 40 and/or the second rotational assembly 42, respectively. The first electric machine 86 and/or the second electric machine 90 may alternatively be driven by the first rotational assembly 40 and/or the second rotational assembly 42, respectively to generate electrical power for the electrical assembly 26 (e.g., an electrical distribution system of the aircraft 1000 and/or the propulsion system 20).

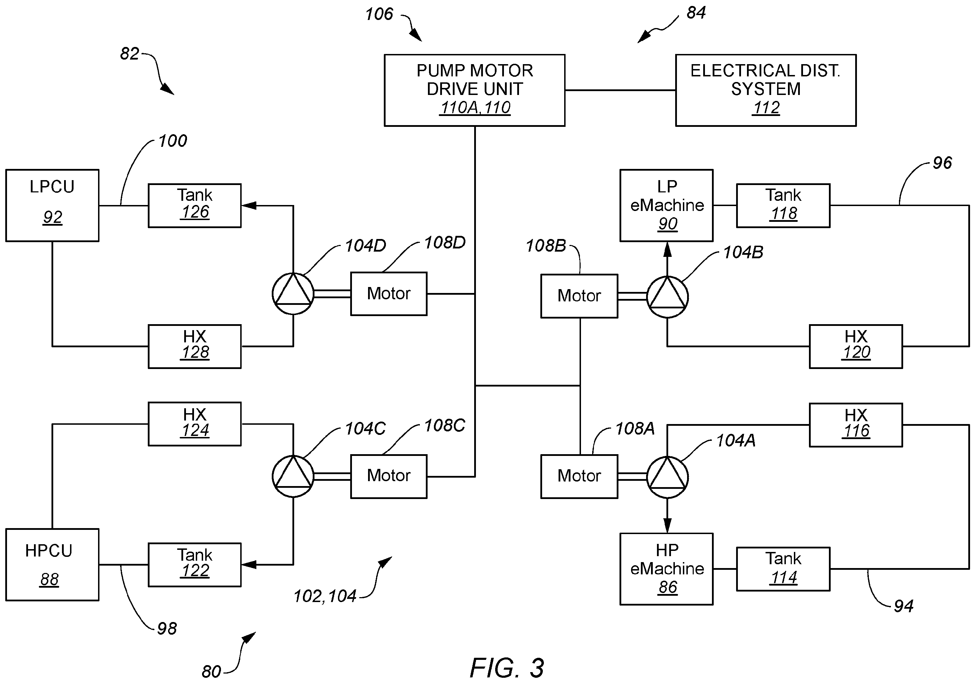

FIG. 3 schematically illustrates the first electric machine assembly 80, the second electric machine assembly 82, and the thermal management assembly 84. Components of the thermal management assembly 84 form a first electric machine cooling circuit 94, a second electric machine cooling circuit 96, a first control unit (CU) cooling circuit 98, and a second CU cooling circuit 100. The thermal management assembly 84 includes a pump assembly 102. The pump assembly 102 includes a plurality of pumps 104 and a pump controller 106. The pumps 104 are configured to circulate coolant fluid through the cooling circuits 94, 96, 98, 100. The pumps 104 of the FIG. 3 pump assembly 102 include pumps 104A, 104B, 104C, 104D for the cooling circuits 94, 96, 98, 100, respectively. Each of the pumps 104 includes an electric motor 108 electrically connected to the pump controller 106. The pumps 104A-D of FIG. 3 include electric motors 108A-D, respectively. The pump controller 106 includes at least one pump motor drive unit 110 configured to supply and condition electrical power from an aircraft electrical distribution system 112 for the electric motors 108 to control operation of the pumps 104.

The first electric machine cooling circuit 94 is configured to direct a coolant fluid (e.g., oil) through the first electric machine 86 to facilitate thermal management (e.g., cooling) and/or lubrication of the first electric machine 86. The first electric machine cooling circuit 94 of FIG. 3 is isolated from fluid communication with the other cooling circuits 96, 98, 100. However, in some embodiments, the first electric machine cooling circuit 94 may be combined or otherwise connected with one or more other cooling circuits. The thermal management assembly 84 and its first electric machine cooling circuit 94 include a coolant tank 114 and one or more heat exchangers 116 forming the first electric machine cooling circuit 94. The first electric machine cooling circuit 94 may be further formed by other components such as, but not limited to, valves, filters, regulators, and the like. Fluid interconnections between components of the first electric machine cooling circuit 94 may be made by any suitable conduit (e.g., pipe, hose, tube, etc.). Examples of the heat exchangers 116 include air-oil heat exchangers, fuel-oil heat exchangers, oil-oil heat exchangers, and the like. The pump 104A forms a portion of the first electric machine cooling circuit 94 and is configured to circulate the coolant along the first electric machine cooling circuit 94 from the coolant tank 114, through the first electric machine 86 and the heat exchanger(s) 116, and back to the coolant tank 114.

The second electric machine cooling circuit 96 is configured to direct a coolant fluid (e.g., oil) through the second electric machine 90 to facilitate thermal management (e.g., cooling) and/or lubrication of the second electric machine 90. The second electric machine cooling circuit 96 of FIG. 3 is isolated from fluid communication with the other cooling circuits 94, 98, 100. However, in some embodiments, the second electric machine cooling circuit 96 may be combined or otherwise connected with one or more other cooling circuits. The thermal management assembly 84 and its second electric machine cooling circuit 96 include a coolant tank 118 and one or more heat exchangers 120 forming the second electric machine cooling circuit 96. The second electric machine cooling circuit 96 may be further formed by other components such as, but not limited to, valves, filters, regulators, and the like. Fluid interconnections between components of the second electric machine cooling circuit 96 may be made by any suitable conduit (e.g., pipe, hose, tube, etc.). Examples of the heat exchangers 120 include air-oil heat exchangers, fuel-oil heat exchangers, oil-oil heat exchangers, and the like. The pump 104B forms a portion of the second electric machine cooling circuit 96 and is configured to circulate the coolant along the second electric machine cooling circuit 96 from the coolant tank 118, through the second electric machine 90 and the heat exchanger(s) 120, and back to the coolant tank 118.

The first CU cooling circuit 98 is configured to circulate a coolant fluid (e.g., oil, refrigerants, ammonia-based coolants, ethylene glycol (EG), propylene glycol (PG), or propylene glycol with water (PGW), etc.) through the first control unit 88 to facilitate thermal management (e.g., cooling) of the first control unit 88. The first CU cooling circuit 98 of FIG. 3 is isolated from fluid communication with the other cooling circuits 94, 96, 100. However, in some embodiments, the first CU cooling circuit 98 may be combined or otherwise connected with one or more other cooling circuits. The thermal management assembly 84 and its first CU cooling circuit 98 include a coolant tank 122 and one or more heat exchangers 124 forming the first CU cooling circuit 98. The first CU cooling circuit 98 may be further formed by other components such as, but not limited to, valves, filters, regulators, and the like. Fluid interconnections between components of the first CU cooling circuit 98 may be made by any suitable conduit (e.g., pipe, hose, tube, etc.). Examples of the heat exchangers 124 include air-oil heat exchangers, fuel-oil heat exchangers, oil-oil heat exchangers, and the like. The pump 104C forms a portion of the first CU cooling circuit 98 and is configured to circulate the coolant along the first CU cooling circuit 98 from the coolant tank 122, through the first control unit 88 and the heat exchanger(s) 124, and back to the coolant tank 122.

The second CU cooling circuit 100 is configured to circulate a coolant fluid (e.g., oil, refrigerants, ammonia-based coolants, ethylene glycol (EG), propylene glycol (PG), or propylene glycol with water (PGW), etc.) through the second control unit 92 to facilitate thermal management (e.g., cooling) of the second control unit 92. The second CU cooling circuit 100 of FIG. 3 is isolated from fluid communication with the other cooling circuits 94, 96, 98. However, in some embodiments, the second CU cooling circuit 100 may be combined or otherwise connected with one or more other cooling circuits. The thermal management assembly 84 and its second CU cooling circuit 100 include a coolant tank 126 and one or more heat exchangers 128 forming the second CU cooling circuit 100. The second CU cooling circuit 100 may be further formed by other components such as, but not limited to, valves, filters, regulators, and the like. Fluid interconnections between components of the second CU cooling circuit 100 may be made by any suitable conduit (e.g., pipe, hose, tube, etc.). Examples of the heat exchangers 128 include air-oil heat exchangers, fuel-oil heat exchangers, oil-oil heat exchangers, and the like. The pump 104D forms a portion of the second CU cooling circuit 100 and is configured to circulate the coolant along the second CU cooling circuit 100 from the coolant tank 126, through the second control unit 92 and the heat exchanger(s) 128, and back to the coolant tank 126.

The pump motor drive unit 110 is configured to regulate a flow of electricity from the electrical distribution system 112 to the electric motors 108. This electricity flow regulation may include: (a) turning-on the flow of electricity from the electrical distribution system 112 to the electric motors 108 (e.g., electrically coupling the respective electric machine 86, 90 to the electrical distribution system 112); (b) turning-off the flow of electricity from the electrical distribution system 112 to the electric motors 108 (e.g., electrically decoupling the respective electric machine 86, 90 from the electrical distribution system 112); (c) moderating the flow of electricity from the electrical distribution system 112 to the electric motors 108 (e.g., to control a rotation speed and/or torque of the electric motors 108).

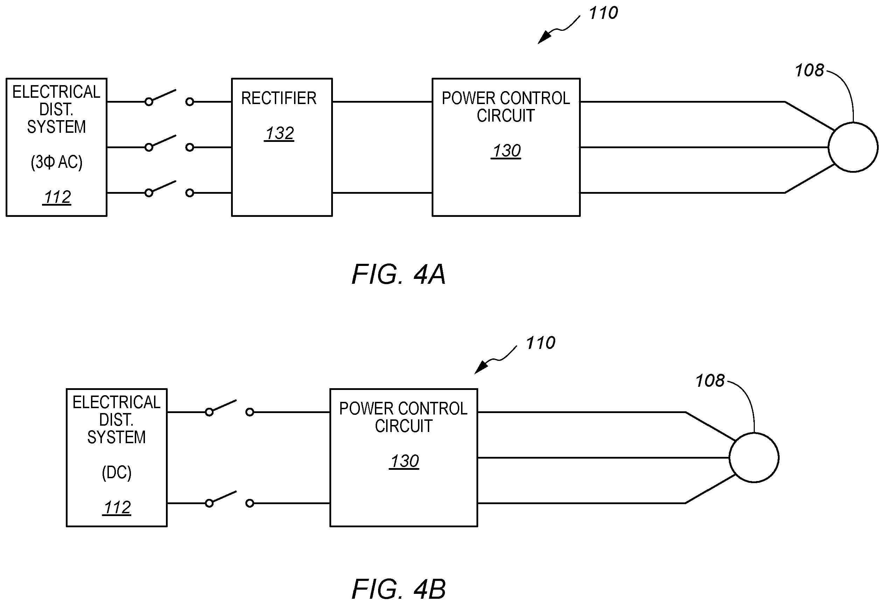

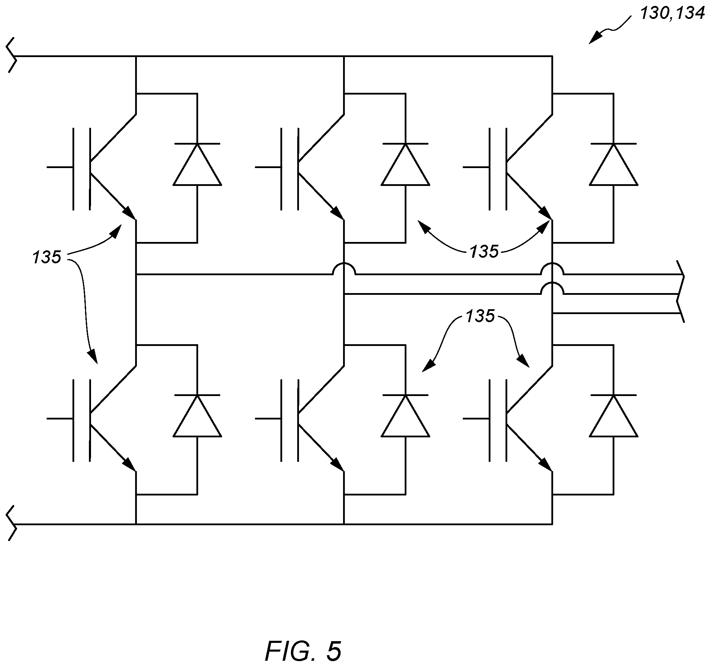

FIGS. 4A and 4B schematically illustrate the pump motor drive unit 110 electrically coupled between the electrical distribution system 112 and the electric motors 108. The pump motor drive units 110 of FIGS. 4A and 4B each include a power control circuit 130. The power control unit 130 is configured to receive a power input and generate a three-phase (3Φ) alternating current (AC) power output to the electric motors 108. For example, the power control unit 130 of FIGS. 4A and 4B is configured to receive a direct current (DC) power input and generate the three-phase (3Φ) AC power output. The electrical distribution system 112 of FIG. 4A is a three-phase AC electrical distribution system. The pump motor drive unit 110 of FIG. 4A further includes a rectifier circuit 132. The rectifier circuit 132 is configured to convert the three-phase AC current from the electrical distribution system 112 to the DC power input for the power control circuit 130. The electrical distribution system 112 of FIG. 4B is a DC (e.g., high-voltage DC) electrical distribution system. The power control circuit 130 of FIG. 4B may receive the DC power input directly from the electrical distribution system 112. The power control circuit 130 may include any suitable control circuitry configured to moderate the flow of electricity from the electrical distribution system 112 to control the operation of the electric motors 108. FIG. 5 illustrates an exemplary configuration of the power control circuit 130. The power control circuit 130 of FIG. 5 includes a three-phase inverter circuit 134. The inverter circuit 134 may include a plurality of switching devices 135 such as, but not limited to, insulated gate bipolar transistors (IGBTs), metal-oxide-semiconductor field-effect transistors (MOSFETs), or the like, arranged to selectively generate a three-phase AC current output from the DC current input. Of course, the present disclosure is not limited to the foregoing exemplary configurations of the pump motor drive unit 110 and power control circuit 130 of FIGS. 4A, 4B, and 5, and the pump motor drive unit 110 may alternatively include any power electronics suitable for moderating the flow of electricity from the electrical distribution system 112 to the electric motors 108.

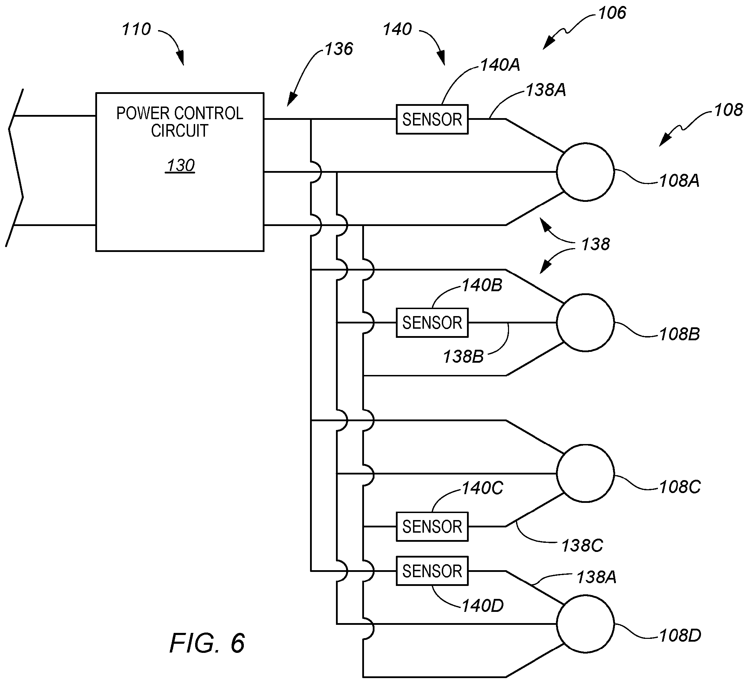

Referring to FIG. 6, the three-phase AC power output 136 of the power control circuit 130 may be electrically coupled with a three-phase AC power input 138 of each of the electric motors 108, for example, the electric motors 108A-D. In other words, the electric motors 108 may be connected to the three-phase AC power output 136 in parallel. The three-phase AC power input 138 includes a first phase line 138A, a second phase line 138B, and a third phase line 138C.

The pump controller 106 of FIG. 6 includes a plurality of current sensors 140. The current sensors 140 of FIG. 6 include one current sensor for the three-phase AC power input 138 of each of the electric motors 108. The current sensors 140 may include one current sensor on one (e.g., only one) of the phase lines 138A-C of the three-phase AC power input 138 of each of the electric motors 108 and/or at least one of the current sensors 140 on each of the first phase line 138A, the second phase line 138B, and the third phase line 138C among the three-phase AC power inputs 138 for the electric motors 108 connected to the three-phase AC power output 136 in parallel. For example, the current sensors 140 of FIG. 6 include a first current sensor 140A on the first phase line 138A of the three-phase AC power input 138 of the first electric motor 108A, a second current sensor 140B on the second phase line 138B of the three-phase AC power input 138 of the second electric motor 108B, a third current sensor 140C on the third phase line 138C of the three-phase AC power input 138 of the third electric motor 108C, and a fourth current sensor 140D on the first phase line 138A of the three-phase AC power input 138 of the fourth electric motor 108D. The current sensors 140 are configured to measure an electrical current along the respective one of the phase lines 138A-C between the three-phase AC power output 136 and the respective electric motor 108, for example, to facilitate electrical fault detection by the pump controller 106. In some embodiments, the pump controller 106 may monitor voltage and frequency on each of the phase lines 138A-C to facilitate operation and control of the electric motors 108, while monitoring electric current as described above for electrical fault detection. The present disclosure, however, is not limited to the foregoing exemplary electrical monitoring and control features of the pump controller 106. At least some conventional motor controllers may include current sensors on each phase of a three-phase AC input to an electric motor in order to monitor electrical current for each phase. In contrast to these conventional motor controllers, the present disclosure configuration of the parallel three-phase AC power inputs 138 of the electric motors 108 and the arrangement of the current sensors 140 described above facilitates monitoring each of the electric motors 108 and each of the AC phases while providing a significant reduction in the number of current sensors.

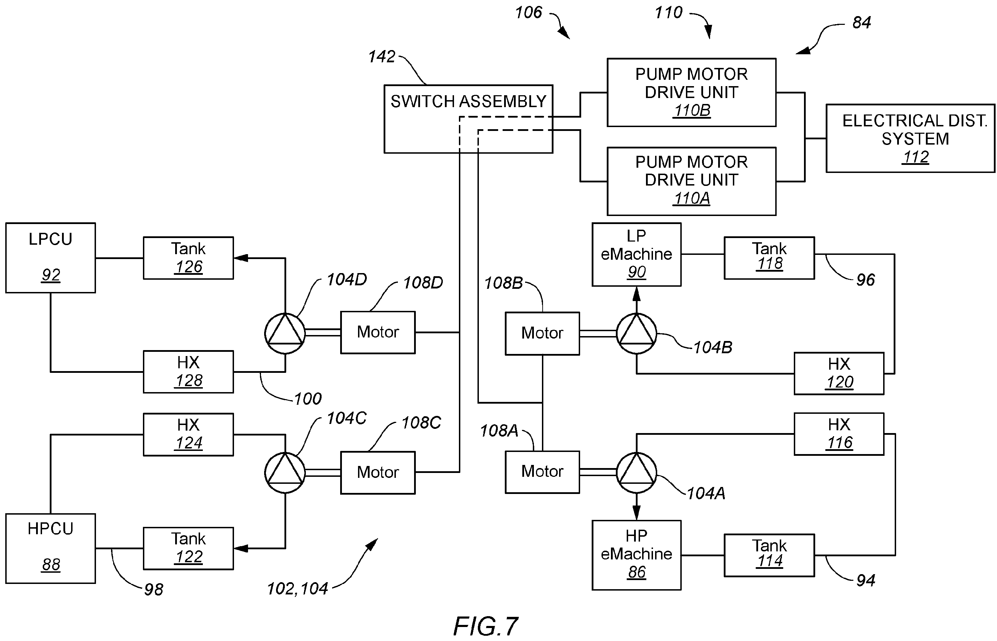

Referring to FIGS. 7 and 9-10, in some embodiments, the pump controller 106 may include a plurality of pump motor drive units 110 and a switch assembly 142. The pump controller 106 of FIG. 7 includes a first pump motor drive unit 110A and a second pump motor drive unit 110B selectively, electrically connected with the electric motors 108 by the switch assembly 142. In an operating state (e.g., a default operating state) of the pump assembly 102, the switch assembly 142 may electrically connect the first pump motor drive unit 110A with a first subset of the electric motors 108 and electrically connect the second pump motor drive unit 110B with a second, different subset of the electric motors 108. Operation in this state may facilitate reduced heat generation relative to other operating states in which all of the electric motors 108 are supplied with electrical power in parallel from a single source (e.g., a single pump motor drive unit 110 or one of a plurality of pump motor drive units 110). For example, the switch assembly 142 of FIG. 7 electrically connects the first pump motor drive unit 110A with the electric motors 108A-B of the pumps 104A-B for the electric motor cooling circuits 94, 96 and electrically connects the second pump motor drive unit 110B with the electric motors 108C-D of the pumps 104C-D for the CU cooling circuits 98, 100. In some other operating states, the switch assembly 142 may operate to electrically connect each of the electric motors 108 with one of the pump motor drive units 110A-B and electrically disconnect each of the electric motors 108 from the other of the pump motor drive units 110A-B, for example, in response to a pump motor drive unit 110 failure.

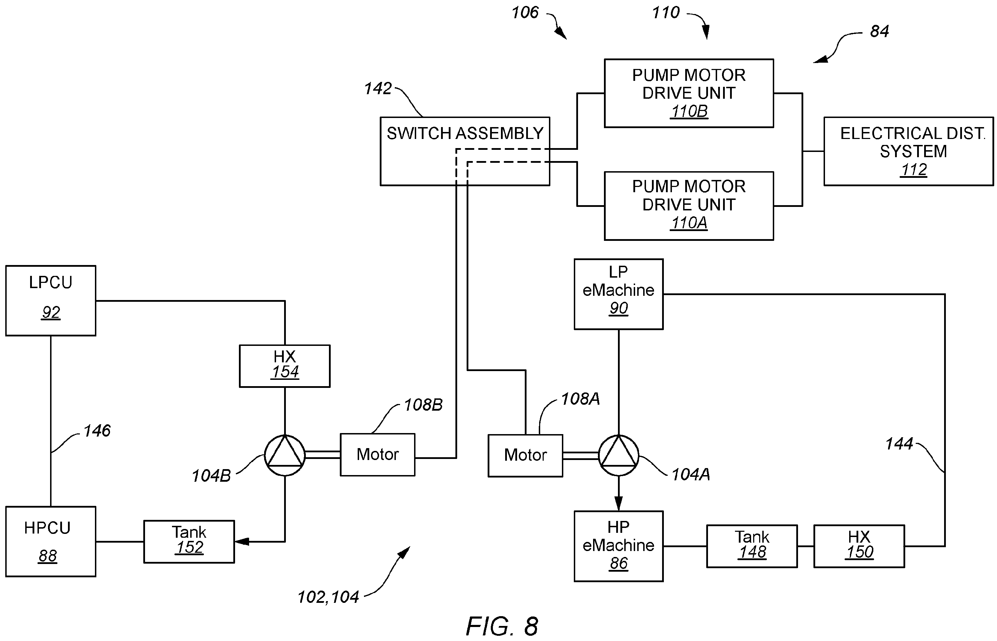

Referring to FIGS. 8-10, in some embodiments, components of the thermal management assembly 84 may form an electric machine cooling circuit 144 for both the first electric machine 86 and the second electric machine 90 and a CU cooling circuit 146 for both of the first control unit 88 and the second control unit 92, as shown in FIG. 8. The electric machine cooling circuit 144 is configured to direct a coolant fluid (e.g., oil) through the first electric machine 86 and the second electric machine 90 to facilitate thermal management (e.g., cooling) and/or lubrication of the first electric machine 86 and the second electric machine 90. The thermal management assembly 84 and its electric machine cooling circuit 144 include a coolant tank 148 and one or more heat exchangers 150 forming the electric machine cooling circuit 144. The pump 104A forms a portion of the electric machine cooling circuit 144 and is configured to circulate the coolant along the electric machine cooling circuit 144 from the coolant tank 148, through the first electric machine 86, the second electric machine 90, and the heat exchanger(s) 150, and back to the coolant tank 148. The CU cooling circuit 146 is configured to circulate a coolant fluid (e.g., oil, refrigerants, ammonia-based coolants, ethylene glycol (EG), propylene glycol (PG), or propylene glycol with water (PGW), etc.) through the first control unit 88 and the second control unit 92 to facilitate thermal management (e.g., cooling) of the first control unit 88 and the second control unit 92. The thermal management assembly 84 and its CU cooling circuit 146 include a coolant tank 152 and one or more heat exchangers 154 forming the CU cooling circuit 146. The pump 104B forms a portion of the CU cooling circuit 146 and is configured to circulate the coolant along the CU cooling circuit 146 from the coolant tank 152, through the first control unit 88, the second control unit 92, and the heat exchanger(s) 154, and back to the coolant tank 152.

The pump controller 106 of FIG. 8 includes the first pump motor drive unit 110A, the second pump motor drive unit 110B, and the switch assembly 142. The pump first pump motor drive unit 110A and the second pump motor drive unit 110B are selectively, electrically connected with the electric motors 108 by the switch assembly 142. In an operating state (e.g., a default operating state) of the pump assembly 102, the switch assembly 142 may electrically connect the first pump motor drive unit 110A with the first electric motor 108A and electrically connect the second pump motor drive unit 110B with the second electric motor 108B. In some other operating states, the switch assembly 142 may operate to electrically connect each of the electric motors 108 with one of the pump motor drive units 110A-B and electrically disconnect each of the electric motors 108 from the other of the pump motor drive units 110A-B, for example, in response to a pump motor drive unit 110 failure.

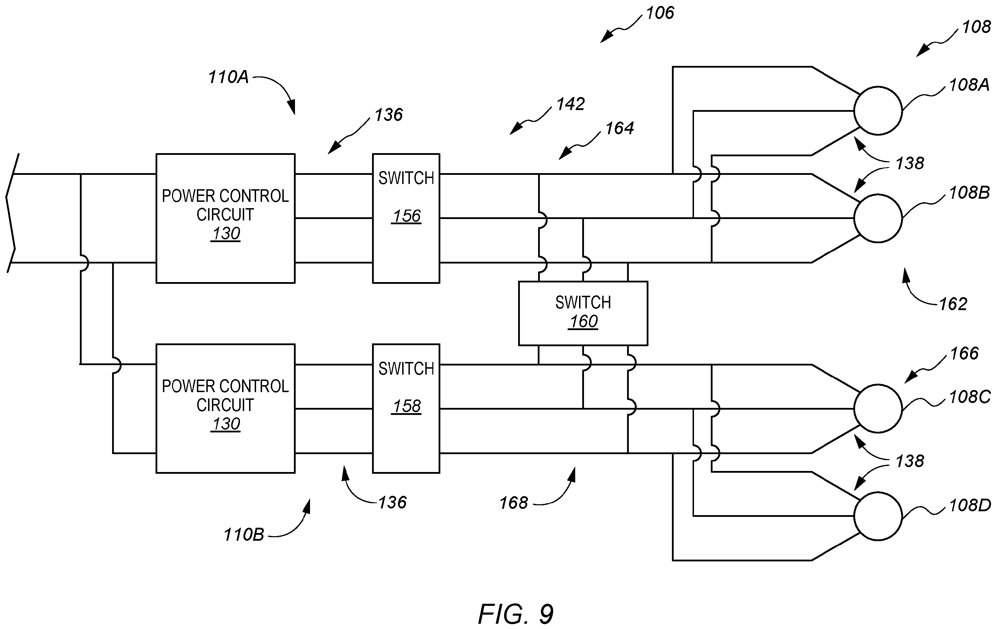

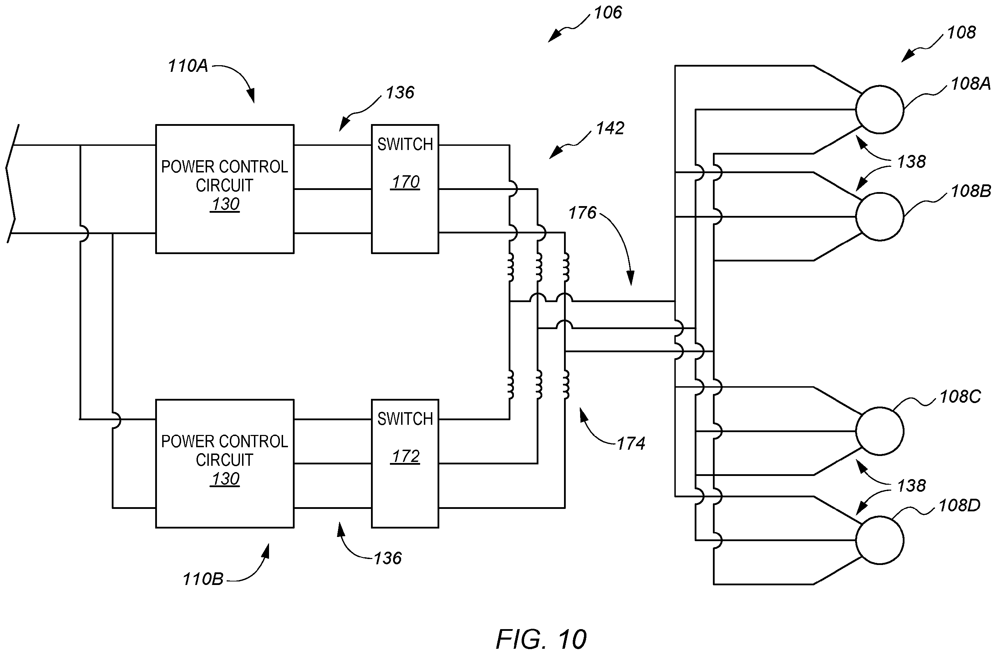

FIGS. 9 and 10 schematically illustrate exemplary, non-limiting embodiments of the switch assembly 142.

The switch assembly 142 of FIG. 9 includes a first switching circuit 156, a second switching circuit 158, and a third switching circuit 160 (e.g., three-phase, solid-state switching circuits). Each of the switching circuits 156, 158, 160 is configurable in a closed state and an open state. The first switching circuit 156 is electrically connected with and between the first pump motor drive unit 110A and a first subset 162 of the electric motors 108, for example, the first electric motor 108A and the second electric motor 108B, along a first three-phase line 164. The second switching circuit 158 is electrically connected with and between the second pump motor drive unit 110B and a second subset 166 of the electric motors 108, for example, the third electric motor 108C and the fourth electric motor 108D, along a second three-phase line 168. The third switching circuit 160 is electrically connected with and between the first three-phase line 164 and the second three-phase line 168, for example, electrically downstream of the first switching circuit 156 and the second switching circuit 158. The switching circuits 156, 158, 160 may be configured in their closed and open states to selectively, electrically connect each of the electric motors 108 with the first pump motor drive unit 110A, each of the electric motors 108 with the second pump motor drive unit 110B, or the first subset 162 of the electric motors 108 with the first pump motor drive unit 110A and the second subset 166 of the electric motors 108 with the second pump motor drive unit 110B.

The switch assembly 142 of FIG. 10 includes a first switching circuit 170, a second switching circuit 172 (e.g., three-phase, solid-state switching circuits), and a filtering circuit 174 (e.g., an inductive filtering circuit). Each of the switching circuits 170, 172 is configurable in a closed state and an open state. The first switching circuit 170 is electrically connected with and between the first pump motor drive unit 110A and each of the electric motors 108 through the filtering circuit 174 and along a common three-phase line 176. The second switching circuit 172 is electrically connected with and between the second pump motor drive unit 110B and each of the electric motors 108 through the filtering circuit 174 and along the common three-phase line 176. The configuration of the switch assembly 142 of FIG. 10 allows the electric motors 108 to be powered in parallel from the first pump motor drive unit 110A and/or the second pump motor drive unit 110B along the common three-phase line 176.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A hybrid-electric aircraft propulsion system (20) comprising:
a gas turbine engine (22) comprising a first rotational assembly (40), the first rotational assembly (40) comprises a first shaft (46), a bladed first compressor rotor (48), and a bladed first turbine rotor (50), the first shaft (46) interconnecting the bladed first compressor rotor (48) and the bladed first turbine rotor (50); and
an electrical assembly (26) comprising a first electric machine (86), a first control unit (88), and a thermal management assembly (84),
the first electric machine (86) being coupled with the first rotational assembly (40),
the first control unit (88) being electrically connected to the first electric machine (86), and
the thermal management assembly (84) comprises a first electric machine cooling circuit (94), a first control unit (CU) cooling circuit (98), and a pump assembly (102), the first electric machine cooling circuit (94) being connected in fluid communication with the first electric machine (86), the first CU cooling circuit (98) being connected in fluid communication with the first control unit (88), the pump assembly (102) comprising a first pump (104A), a second pump (104C), and a pump controller (106), the first pump (104A) forming a portion of the first electric machine cooling circuit (94), the first pump (104A) comprising a first electric motor (108A), the second pump (104C) forming a portion of the first CU cooling circuit (98), the second pump (104C) comprising a second electric motor (108C), the pump controller (106) comprising a first pump motor drive unit (110) operable to receive first electrical power from an aircraft electrical distribution system (112) and supply second electrical power to the first electric motor (108A) and the second electric motor (108B).

2. The hybrid-electric aircraft propulsion system of claim 1, wherein:
the gas turbine engine comprises a second rotational assembly, the second rotational assembly comprises a second shaft, a bladed second compressor rotor, and a bladed second turbine rotor, and the second shaft interconnects the bladed second compressor rotor and the bladed second turbine rotor;
the electrical assembly comprises a second electric machine and a second control unit, the second electric machine is coupled with the second rotational assembly, and the second control unit is electrically connected to the second electric machine; and
the thermal management assembly comprises a second electric machine cooling circuit and a second control unit (CU) cooling circuit, the second electric machine cooling circuit is connected in fluid communication with the second electric machine, the second CU cooling circuit is connected in fluid communication with the second control unit, the pump assembly comprises a third pump and a fourth pump, the third pump forms a portion of the second electric machine cooling circuit, the third pump comprises a third electric motor, the fourth pump forms a portion of the second CU cooling circuit, the fourth pump comprises a fourth electric motor, and the first pump motor drive unit is operable to supply the second electrical power to the third electric motor and the fourth electric motor.

3. The hybrid-electric aircraft propulsion system of claim 1, wherein:
the gas turbine engine comprises a second rotational assembly, the second rotational assembly comprises a second shaft, a bladed second compressor rotor, and a bladed second turbine rotor, and the second shaft interconnects the bladed second compressor rotor and the bladed second turbine rotor;
the electrical assembly comprises a second electric machine and a second control unit, the second electric machine is coupled with the second rotational assembly, and the second control unit is electrically connected to the second electric machine;
the first electric machine cooling circuit is connected in fluid communication with the second electric machine; and
the first CU cooling circuit is connected in fluid communication with the second control unit.

4. The hybrid-electric aircraft propulsion system of claim 1, 2 or 3, wherein each of the first electric motor and the second electric motor comprises a three-phase alternating current (AC) power input, and the three-phase AC power input of the first electric motor and the second electric motor are connected in parallel with a three-phase AC power output of the first pump motor drive unit.

5. The hybrid-electric aircraft propulsion system of claim 4, wherein the pump controller comprises a plurality of current sensors, a single first current sensor of the plurality current sensors disposed at the three-phase AC power input of the first electric motor, a single second current sensor of the plurality of current sensors disposed at the three-phase AC power input of the second electric motor.

6. The hybrid-electric aircraft propulsion system of claim 5, wherein the single first current sensor is disposed at a first phase line of the three-phase AC power input of the first electric motor and the single second current sensor is disposed at a second phase line of the three-phase AC power input of the second electric motor.

7. The hybrid-electric aircraft propulsion system of any preceding claim, wherein the pump controller comprises a second pump motor drive unit and a switch assembly, the second pump motor drive unit is operable to receive the first electrical power from the aircraft electrical distribution system and supply third electrical power to the first electric motor and the second electric motor, and the switch assembly selectively electrically connects the first pump motor drive unit and the second pump motor drive unit with the first electric motor and the second electric motor.

8. The hybrid-electric aircraft propulsion system of claim 7, wherein the switch assembly is configurable in a first state, a second state, and a third state, the switch assembly in the first state electrically connects the first electric motor and the second electric motor with the first pump motor drive unit, the switch assembly in the second state electrically connects the first electric motor and the second electric motor with the second pump motor drive unit, and the switch assembly in the third state electrically connects the first electric motor with the first pump motor drive unit and the second electric motor with the second pump motor drive unit.

9. The hybrid-electric aircraft propulsion system of claim 7, wherein the switch assembly comprises a first switching circuit, a second switching circuit, and a third switching circuit, the first switching circuit is electrically connected between the first pump motor drive unit and the first electric motor along a first three-phase alternating current (AC) line, the second switching circuit is electrically connected between the second pump motor drive unit and the second electric motor along a second three-phase AC line, and the third switching circuit is electrically connected between the first three-phase AC line and the second three-phase AC line.

10. The hybrid-electric aircraft propulsion system of claim 7, wherein the switch assembly comprises a first switching circuit, a second switching circuit, and a filtering circuit, the first switching circuit is electrically connected between the first pump motor drive unit and the filtering circuit, the second switching circuit is electrically connected between the second pump motor drive unit and the filtering circuit, and the filtering circuit is electrically connected with the first electric motor and the second electric motor by a common three-phase alternating current (AC) line.

11. A method for operating a thermal management assembly of a hybrid-electric propulsion system, the method comprising:
rotating a first rotational assembly, the first rotational assembly comprising a first shaft, a bladed first compressor rotor, and a bladed first turbine rotor, the first shaft interconnecting the bladed first compressor rotor and the bladed first turbine rotor;
selectively operating a first electric machine coupled with the first rotational assembly using a first control unit electrically connected to the first electric machine; and
operating a thermal management assembly comprising a first electric machine cooling circuit and a first control unit (CU) cooling circuit by pumping a coolant through each of the first electric machine cooling circuit and the first CU cooling circuit with a first pump and a second pump, respectively, pumping the coolant with the first pump and the second pump comprising driving the first pump and the second pump with a pump motor drive unit of a pump controller by receiving first electrical power from an aircraft electrical distribution system at the pump motor drive unit and supplying second electrical power from the pump motor drive unit to a first electric motor of the first pump and a second electric motor of the second pump.

12. The method of claim 11, wherein each of the first electric motor and the second electric motor comprises a three-phase alternating current (AC) power input, and the three-phase AC power input of the first electric motor and the second electric motor are connected in parallel with a three-phase AC power output of the pump motor drive unit, the method further comprising:
measuring a single current on the three-phase AC power input of the first electric motor with a first current sensor at a first phase line of the three-phase AC power input of the first electric motor; and
measuring a single current on the three-phase AC power input of the second electric motor with a second current sensor at a second phase line of the three-phase AC power input of the second electric motor.
